# Europäisches Patentamt

## European Patent Office

## Office européen des brevets

(11) Veröffentlichungsnummer: **0 085 836**

**B1**

(12) # EUROPÄISCHE PATENTSCHRIFT

(45) Veröffentlichungstag der Patentschrift:
20.07.88

(21) Anmeldenummer: **83100210.0**

(22) Anmeldetag: **12.01.83**

(51) Int. Cl.⁴: **C 08 F 8/42,** C 08 G 85/00,
C 08 F 4/44

(54) Verwendung polymerer Organo-Borverbindungen als Polymerisationsinitiatoren.

(30) Priorität: **21.01.82 DE 3201780**

(43) Veröffentlichungstag der Anmeldung:
**17.06.83 Patentblatt 83/33**

(45) Bekanntmachung des Hinweises auf die Patenterteilung:
**20.07.88 Patentblatt 88/29**

(84) Benannte Vertragsstaaten:
**AT BE CH DE FR GB IT LI LU NL SE**

(56) Entgegenhaltungen:
**US-A-2 985 633**
**US-A-3 347 819**
**US-A-3 928 293**
**US-A-4 167 616**

(73) Patentinhaber: **Henkel Kommanditgesellschaft auf Aktien, Postfach 1100 Henkelstrasse 67, D-4000 Düsseldorf- Holthausen (DE)**

(72) Erfinder: **Ritter, Wolfgang, Dr., Hochdahler Strasse 32, D-4010 Hilden (DE)**

## Beschreibung

Radikalische Polymerisationen werden üblicherweise durch Initiatoren wie Peroxide, Hydroperoxide oder Azoverbindungen ausgelöst. Die Geschwindigkeit des Initiatorzerfalles in Radikale ist temperaturabhängig. Übliche Radikalinitiatoren sind bei Raumtemperatur stabil. Ihr Zerfall in Radikale wird - entsprechend ihrer Struktur - meist im Temperaturbereich um 60°C ausgelöst und damit die Polymerisation gestartet. Oftmals wird allerdings auch eine Polymerisation bei niederen Temperaturen erwünscht. Durch geeignete Redoxsysteme, zum Beispiel Peroxid/Amin, wird der Zerfall von Peroxiden bereits bei Raumtemperatur bewirkt. Bei der Polymerisation müssen entsprechend 2 Komponenten dosiert werden.

Bekannt ist, daß Boralkylverbindungen allein geeignet sind, radikalische Polymerisationen bei Raumtemperatur auszulösen. Die Borverbindungen sind dabei aerob wirksame Initiatoren, das heißt sie entwickeln ihre Aktivität durch Zutritt von Sauerstoff, üblicherweise Luft. Der zur Aktivierung notwendige Sauerstoff ist praktisch allgegenwärtig und braucht nicht getrennt zugegeben zu werden. Bevorzugt eingesetzt werden einfache Trialkylborverbindungen, zum Beispiel Triethylbor- oder Tri-n-butylbor. Die Verwendung von Trialkylborverbindungen als Polymerisationsinitiatoren ist beispielsweise beschrieben in den US-A-3 476 727, 3 633 490, 2 985 633 und der GB-A-1 113 722. In der US-A-4 167 616 werden Umsetzungsprodukte von Butadien und Diboran als Polymerisationsstarter beschrieben, wobei auch entsprechende polymere Umsetzungsprodukte beschrieben sind. Charakteristisch für diese polymeren Boralkylverbindungen ist allerdings, daß jeweils kurze Abschnitte von C-C-Bindungen durch B-C-Einheiten unterbrochen beziehungsweise miteinander verbunden sind.

Als wesentliche Vorteile der Boralkylinitiatoren sind unter anderem zu nennen: Die Polymerisationen laufen auch bei niedriger Temperatur ab, das Startersystem liegt in einkomponentiger Form vor und es kann schließlich die Polymerisationsgeschwindigkeit durch Variation des Sauerstoffangebots beeinflußt werden.

Die einfachen Trialkylborverbindungen beispielsweise Triethylbor oder Tri-n-butylbor, aber auch Umsetzungsprodukte von Dienen beispielsweise Butadien (1,3), Pentadien (1,3) und so weiter mit Diboran sind mit Zündtemperaturen unter 0°C sehr leicht selbstentzündlich - vergleiche hierzu beispielsweise DE-A-2 321 215. Sie stellen auch bei extremem Aufwand während der Handhabung ein erhebliches Sicherheitsrisiko dar. Bei Sauerstoffzutritt erfolgt die Oxidation zu Borsäureestern, welche nicht mehr polymerisationsauslösend wirken. Die Anwendung und insbesondere die Dosierung von Boralkylen erfordert daher - ebenso wie selbstverständlich auch ihr Herstellungsverfahren - völligen Sauerstoffauschluß. Konkret muß die jeweils benötigte Substanzmenge unter Inertgas in völlig dichte Gefäße abgepackt und ein Sauerstoffzutritt zum Vorratsgefäß ausgeschlossen werden.

Die vorliegende Erfindung geht von der Aufgabe aus, die Verwendung spezieller Organo-Borverbindungen als aerob wirkende Initiatoren für die Polymerisationsauslösung aufzuzeigen, wobei diese die aufgezählten Vorteile der bisher bekannten Boralkylverbindungen aufweisen und insbesondere bei der Zugabe zu Monomeren durch Oxidation mit Luftsauerstoff leicht steuerbare Polymerisationen auslösen. Abweichend von den bisher bekannten Systemen sollen die speziellen Organo-Borverbindungen in reiner Form aber kaum sauerstoffempfindlich und in gar keinem Fall selbstentzündlich sein. Im Extremfall schlägt die Erfindung die Verwendung von speziellen neuen Boralkylverbindungen vor, die bei der Lagerung an der Luft im wesentlichen stabil sind, dennoch bei Zugabe zu Monomeren spontan die Polymerisation auslösen.

Die technische Lösung der erfindungsgemäßen Aufgabe geht von der überraschenden Feststellung aus, daß durch die Fixierung borhaltiger Reste an einer gegen Zutritt von Luftsauerstoff wenigstens weitgehend unempfindlichen Polymermatrix eine Klasse von Organo-Borverbindungen geschaffen und isoliert werden kann, die Eigenschaftsverbesserungen in der gewünschten Richtung besitzt.

Gegenstand der Erfindung ist dementsprechend die Verwendung von Organo-Borverbindungen, bei denen die Bor enthaltenden Reste an eine gegen Zutritt von Luftsauerstoff wenigstens weitgehend unempfindliche organische Polymermatrix gebunden sind, als aerob wirkende Initiatoren für die Polymerisationsauslösung. In den eingesetzten Organo-Borverbindungen sind die borhaltigen Reste im Regelfall mit wenigstens einer Valenz des jeweiligen Boratoms unmittelbar an ein Kohlenstoffatom der Polymermatrix gebunden. Es ist allerdings auch möglich, daß mehr als nur eine Borvalenz in einen solchen Bindungszustand mit der Polymermatrix eintritt.

In einer bevorzugten Ausführungsform der Erfindung liegen die polymeren Organo-Borverbindungen als viskos-fließfähige bis feste, bevorzugt wenigstens weitgehend von Lösungsmitteln freie Massen vor. Gegenüber herkömmlichen Boralkylinitiatoren besitzen die eingesetzten Organo-Borverbindungen wesentliche Vorteile: Sie sind nicht selbstentzündlich und stellen geringe Anforderungen bei der Lagerung. Die zur Polymerisationsauslösung benötigte Menge liegt äußerst niedrig, die polymerisationsauslösende Aktivität der genannten Initiatoren bleibt selbst bei längerer Lagerung an der Luft erhalten.

In einer bevorzugten Ausführungsform der Erfindung enthalten die eingesetzten Organo-Borverbindungen an der gegen Luftzutritt stabilen Polymermatrix Borwasserstoff- und/oder Organoborreste. Diese borhaltigen Reste sind zweckmäßigerweise über B-C-Bindungen an die Polymermatrix gebunden. Sofern diese borhaltigen Reste nicht den Boranrest-$BH_2$ selber darstellen, sind diese Substituenten der Polymermatrix ihrerseits am Bor mit wenigstens einer weiteren B-C-Bindung an einen oder mehrere organische Reste gebunden. Bevorzugte Reste sind hier Kohlenwasserstoffreste, die allerdings auch Heteroatome, insbesondere O,N und/oder S enthalten können. Geeignete Substituenten am Bor sind insbesondere Alkyl-, Cycloalkyl- und/oder Arylreste, die in einer oder in den beiden nicht durch die Polymermatrix besetzten Valenzen des Bors vorliegen können.

2

Liegen solche von Wasserstoff abweichenden organischen Reste in beiden Borvalenzen vor, so können sie ihrerseits zu einem Ringsystem geschlossen sein. In einer anderen, bereits erwähnten Ausführungsform der Erfindung greift das Bor mit mehr als nur einer seiner Valenzen an der Polymermatrix an. Auch für diesen Fall gilt allerdings, daß die Matrix vor der Einführung der borhaltigen Reste ein gegen Zutritt von Luftsauerstoff stabiles polymeres Material im Sinne der erfindungsgemäßen Definition ist.

Die efindungsgemäß eingesetzten Organo-Borverbindungen können in einfacher Weise erhalten werden, indem Oligomere beziehungsweise Polymere, die additionsbereite Kohlenstoff-Doppelbindungen enthalten, der Hydroborierung unterworfen und hierdurch die borhaltigen Reste an wenigstens einem Teil der additionsbereiten Doppelbindungen eingeführt werden. Zur Hydroborierung geeignet sind sowohl das Diboran als auch Mono- oder disubstituierte Borane, das heißt Verbindungen der allgemeinen Formel $R_1R_2BH$, wobei in dieser Formel $R_1$ ein organischer Rest, bevorzugt ein Kohlenwasserstoffrest, und $R_2$ Wasserstoff oder ebenfalls ein organischer Rest ist, der mit $R_1$ gleich oder von ihm verschieden sein kann oder auch mit $R_1$ und dem Bor gemeinsam ein Ringsystem bildet.

Polymere Organo-Borverbindungen der erfindungsgemäß eingesetzten Art sind als solche bisher nicht isoliert beziehungsweise beschrieben worden. In der Literatur finden sich vereinzelte Hinweise auf ihre intermediäre Bildung bei der Synthese bestimmter polymerer Verbindungen. Verwiesen wird beispielsweise auf "Macromol.Chem." 178, 2837 - 2842 (1977). Beschrieben werden hier die Synthese- und Struktur-Untersuchung des Poly-(1-hydroxytetramethylen)s durch Hydroborierung des 1,4-Poly-butadiens mit 9-Borabicyclo [3.3.1.]-nonan(9-BBN) mit unmittelbar anschließender Oxidation und Hydrolyse der intermediär gebildeten polymeren Organo-Borverbindung zum hydroxylierten Kohlenwasserstoff-Polymeren. Eine Isolierung der im lösungsmittelhaltigen Reaktionsgemisch intermediär entstehenden polymeren Organo-Borverbindung hat nicht stattgefunden. Entsprechend werden keine Angaben über die Eigenschaften des borhaltigen Polymeren und insbesondere über sein Verhalten gegenüber Luftsauerstoff gemacht. Die Erfindung geht von der überraschenden Erkenntnis aus, daß die Fixierung der geschilderten borhaltigen Reste an einer an sich gegen Zutritt von Luft stabilen oligomeren oder polymeren Matrix zu einem neuen Typ von Organo-Borverbindungen führt, der sich in technisch wesentlichen Eigenschaften von den bisher beschriebenen und in Sonderfällen genutzten Boralkyl-Verbindungen unterscheidet. Besonders auffallend ist die relative Stabilität der erfindungsgemäß beschriebenen polymeren beziehungsweise oligomeren Organo-Borverbindungen gegen Luftzutritt, wodurch ihre praktische Handhabung und Verwendung als Polymerisationsinitiatoren wesentlich erleichtert wird.

Die der Hydroborierung zugängliche ethylenische Doppelbindungen aufweisende Polymermatrix kann je nach Struktur und Molekulargewicht niedrig viskos fließfähig bis fest sein. Ihr mittleres Molekulargewicht kann bis zu Werten von einigen Millionen reichen und liegt üblicherweise im Bereich von etwa 150 bis 3 Millionen. Niedrigere Werte innerhalb dieses Bereiches können bevorzugt sein beispielsweise solche im Bereich von etwa 300 bis 500 000 und insbesondere solche im Bereich von etwa 500 bis 10 000. Für bestimmte Anwendungszwecke kann es wünschenswert sein, daß die Polymermatrix und auch die daraus gewonnenen polymeren Organo-Borverbindungen bei Raumtemperatur viskos fließfähig beziehungsweise streichfähig sind. Hier können beispielsweise Molekulargewichte der Polymermatrix im Bereich von etwa 300 bis 3000 besonders geeignet sein. Für die Wirksamkeit der erfindungsgemäß eingesetzten polymeren Organo-Borverbindungen als Initiatoren ist das allerdings keine Voraussetzung. Im Gegenteil kann die Lagerstabilität von bei Raumtemperatur festen entsprechenden polymeren Organo-Borverbindungen besonders gut sein.

Die polymere Matrix kann vor der Hydroborierung in beliebig starkem Maß ethylenisch ungesättigt sein. Bevorzugt sind entsprechende Materialien, die vor der Hydroborierung eine Jodzahl im Bereich von etwa 1 bis 500 aufweisen. Innerhalb dieses Bereiches liegen besonders bevorzugte Werte der Jodzahl vor der Hydroborierung im Bereich von etwa 5 bis 100 und insbesondere von etwa 8 bis 50.

Die der Hydroborierung zugänglichen ethylenischen Doppelbindungen können im Ausgangspolymeren in der Hauptkette und/oder in Seitenketten-Substituenten vorliegen. Bei einzelnen im folgenden noch zu schildernden polymeren Typen bieten sich insbesondere in Seitenketten-Substituenten vorliegende Doppelbindungen für die Hydroborierung an.

Die Polymermatrix kann vor der Hydroborierung geradkettige oder verzweigte Struktur aufweisen, aber auch polymere Materialien mit vernetzter Struktur sind nicht ausgeschlossen. Während die zuerst genannten Polymer-Typen zur Einführung der borhaltigen Gruppen üblicher weise in Lösungsmitteln umgesetzt werden, können unlösliche vernetzte Polymere, die noch reaktive Doppelbindungen aufweisen, in feinstverteiltem Zustand der Umwandlung zur borhaltigen Matrix unterworfen werden. In diesem Fall werden die unlöslichen feinstverteilten Polymermatrix-Materialien vorzugsweise in mit Lösungsmitteln gequollenem Zustand eingesetzt. Mit ihnen kann dann die Umsetzung in Suspension beziehungsweise Dispersion in einem inerten Lösungsmittel vorgenommen werden. Tritt bei einer Hydroborierung mehr als nur eine Borvalenz in Reaktion mit der Polymermatrix, so kann durch diese Umsetzung über das eingeführte Bor eine wenigstens partielle Vernetzung des polymeren Matrix-Materials eintreten.

Als Polymermatrix eignen sich grundsätzlich alle Polymer-Typen, soweit sie der Hydroborierung zugängliche Doppelbindungen aufweisen und keine reaktiven Gruppen besitzen, die bei der Einführung der borhaltigen Gruppen in das Polymer-Material zu unerwünschten Nebenreaktionen führen.

Im Rahmen der Erfindung ist es dabei durchaus möglich, daß bei der Einführung der borhaltigen Reste in die Polymermatrix nicht nur ethylenische Doppelbindungen hydroboriert werden, sondern daß ein Anteil des borhaltigen Reagenzes auch mit anderen funktionellen Gruppen der Polymermatrix abreagiert. Als solche Gruppen sind beispielsweise Ketogruppen, Amidgruppen, Epoxidgruppen, und gegebenenfalls auch Estergruppierungen zu nennen. Wesentlich ist für die Einhaltung der erfindungsgemäßen Lehre lediglich, daß auch ein hinreichender Anteil der ethylenischen Doppelbindungen der Hydroborierungsreaktion unterliegt, so daß die bororganischen Reste mit aerober Initiatorwirkung in ausreichendem Maße in der Polymermatrix ausgebildet werden.

Das Polymermaterial kann durch Polymerisation bzw. Copolymerisation olefinisch ungesättigter Komponenten, durch Polykondensation oder durch Polyaddition hergestellt worden sein. Durch an sich bekannte geeignete Auswahl der die Polymeren aufbauenden Monomertypen wird der erwünschte Gehalt an reaktiven Doppelbindungen für die anschließende Hydroborierung im Polymermaterial sichergestellt. Besonders geeignet können als Polymermatrix ungesättigte Oligomere bzw. Polymere sein, die durch Polykondensation erhalten worden sind. In Betracht kommen hier alle bekannten Polykondensattypen wie Polyester, Polyamide, Polyimide, Polycarbonate, Polyurethane und dergleichen. Geeignet sind aber auch Oligomere bzw. Polymertypen, die durch Polyaddition erhalten werden.

Bevorzugt werden die Oligomeren bzw. Polymeren wie folgt hergestellt:

a) Durch Polymerisation von einem oder mehreren Dienen beziehungsweise Copolymerisation solcher Diene mit α-Olefinen.

b) Durch Polymerisation von Diolefinen, die im Molekül unterschiedliche reaktive olefinische Gruppen enthalten, beziehungsweise durch Copolymerisation solcher Di-Olefine mit α-Olefinen.

c) Durch Polymerisation von Vernetztern (mehrfach olefinisch ungesättigte Monomere) beziehungsweise durch Copolymerisation solcher Vernetzer mit α-Olefinen.

d) Durch Polyaddition von olefinische Gruppen enthaltenden cyclischen Ethern oder Iminen.

e) Durch Polykondensation von Olefingruppen enthaltenden Dicarbonsäuren mit Diolen oder Diaminen.

f) Durch Polykondensation von Dicarbonsäuren mit Olefingruppen enthaltenden Diolen oder Diaminen.

Die Polymerisation, Polyaddition beziehungsweise Polykondensation kann mit oder ohne Regelung des Molekulargewichts durchgeführt werden. Die entstehenden Produkte sind je nach der gewählten Monomerkombination und/oder Reglerkondensation niedrig-viskos bis fest. Im einzelnen gilt hier das allgemeine Fachwissen der Polymerchemie. Im folgenden wird - ohne Beschränkung der Erfindung auf die speziell genannten Komponenten - eine Aufzählung von monomeren Reaktanten gegeben, die bei der Herstellung der olefinische Gruppen enthaltenden Oligomeren beziehungsweise Polymeren eingesetzt beziehungsweise mitverwendet werden können.

### α-Olefine:

Unsubstituierte geradkettige und/oder verzweigte α-Olefine mit 2 bis 25 C-Atomen, insbesondere mit 2 bis 10 C-Atomen, Vinylderivate wie Vinylester - zum Beispiel Vinylacetat, Vinylstearat, Vinylbenzoat, aber auch substituierte Verbindungen wie Vinyl-2-ethylhexoat, Vinyldichloracetat, Vinylcyanacetat, Vinyl-β-butoxypropionat, α-Methylvinylacetat und dergleichen, Vinylether - zum Beispiel Vinylmethylether, Vinylisobutylether, Vinyl-n-butylether, Vinylcyclohexylether, N-Vinyl- substituierte Verbindungen - beispielsweise Vinylpyrrol, Vinylcarbazol, Vinylindol, Vinylimidazol, Vinyldiphenylamin, Vinyl-phenyl-α-naphtylamin und dergleichen, N-Vinylsäureamide, -imide beziehungsweise N-Vinyl- lactame - zum Beispiel Vinylpyrrollactam, Vinyl-3-methyl-pyrrolidon, Vinyl-N-acetylanilin, Vinylsuccinimid, Vinyl-α-imid, Vinylmethylacetamid, Vinylpyridin-Verbindungen - zum Beispiel 2-,3- beziehungsweise 4-Methyl-Vinylpyridin, 5-Ethyl-2-Vinylpyridin und dergleichen, S-Vinylverbindungen, insbesondere Vinylsubstituierte Sulfide, Vinylthiolester, Vinylsulfoxide und Vinylsulfene, Vinylhalogenide zum Beispiel Vinylchlorid, Acrylverbindungen wie Acrolein, Acrylsäure, Acrylsäurederivate insbesondere Ester beziehungsweise Amide der Acrylsäure und Acrylnitril.

### Diene:

Geeignete Monomere sind beispielsweise 1,3-Butadien, Isopren, Cyclopentadien, Chloropren, 1,3-Pentadien, 2,3-Dimethylbutadien, 1,3-Hexadien oder 2,4-Hexadien.

### Diolefine:

Diallylverbindungen beispielsweise Diallylsulfid, Diallylphthalat oder Diallylisocyanurat, ungesättigte Ester aus ungesättigten Monocarbonsäuren und Diolen beziehungsweise ungesättigte Amide aus ungesättigten Carbonsäuren und Diaminen. Beispiele ungesättigter Carbonsäuren sind etwa Acrylsäure, Methacrylsäure, Crotonsäure oder Undecylensäure.

**Olefinische Gruppen tragende cyclische Ether:**

Geeignet sind beispielsweise vinyl-substituierte Epoxide beziehungsweise entsprechend substituierte cyclische Ether mit mehr als 2 benachbarten Kohlenstoffatomen im Ring, Glycidylester ungesättigter Säuren wie Tetrahydrophthalsäure, Diglycidylester oder Verbindungen wie Vinylcyclohexenepoxid. Durch kationisch initiierte Reaktion - beispielsweise mittels Borfluorid oder seinen Komplexverbindungen - wird unter Öffnung des Ringethers die Polymerisation beziehungsweise Polyaddition ausgelöst. Die entstehenden oligomeren beziehungsweise polymeren Verbindungen enthalten die olefinischen Verbindungen zur nachfolgenden Reaktion mit Boranen. In an sich bekannter Weise kann durch Copolymerisation mit cyclischen Ethern beziehungsweise cyclischen Iminen, die keine funktionell reaktiven Olefineruppen im Molekül aufweisen, die Jodzahl im Oligomeren beziehungsweise Polymeren gesteuert werden.

**Ungesättigte Dicarbonsäuren:**

Dicarbonsäure, Maleinsäure, Fumarsäure, Mesaconsäure, Citraconsäure, Sorbinsäure, Alkenylbernsteinsäuren, zum Beispiel n-Octadecenyl-8-bernsteinsäure und Alkenylbernsteinsäureanhydride, zum Beispiel n-Octadecenyl-8-bernsteinsäureanhydrid.

**Ungesättigte Diole:**

2,5-Dimethyl-3-hexen-2,5-diol, 2-Buten-1,4-diol sowie Diole, die eine olefinisch ungesättigte Funktion in einem Seitenkettensubstituenten enthalten. Analoges gilt für ungesättigte Diamine.

Als gesättigte Dicarbonsäuren, Diole beziehungsweise Diamine können alle bekannten Verbindungen der genannten Art eingesetzt werden, beispielsweise Oxalsäure, Malonsäure Bernsteinsäure, Azelainsäure, Sebazinsäure, Phthalsäure, Hexahydrophthalsäure, Terephthalsäure, 2,3-Pyridin-Dicarbonsäure, 2,3-Chinolin-Dicarbonsäure, Diphenyldicarbonsäure und dergleichen. Beispiele für gesättigte Diole sind Ethylenglykol, Diethylenglykol, Triethylenglykol, Tetraethylenglykol, Propylenglykol, Dipropylenglykol, 1,3-Butylenglykol, 1,4-Butylenglykol, 1,4-Cyclohexandimethanol, 2-Methyl-1,4-butandiol, 1,6-Hexandiol, 1,10-Decandiol und dergleichen. Geeignete Diamine sind beispielsweise Ethylendiamin, Diethylentriamin, Triethylentetramin, Propylendiamin-1,2,Propylendiamin-1,3, Hexamethylendiamin, 1,5-Diaminopentan, 1,8-Diaminooctan, Diaminotoluol, 4,4'-Diamino-diphenylmethan und vergleichbare Diamine.

Für alle im Rahmen der Erfindung zum Einsatz kommenden Oligomeren bzw. Polymeren gilt, daß sie gegenüber dem Zutritt von Luftsauerstoff wenigstens unter Normaltemperatur beständig sind. Sie sind häufig überwiegend durch Ketten bzw. Kettenanteile mit C-C-Bindungen aufgebaut, wenngleich das auch keineswegs Vorbedingung ist. So sind beispielsweise Polyformale bekannte stabile Polymertypen mit alternierenden -C-O-Bindungen, die durch geeignete Modifizierung z. B. mit Seitenkettensubstituenten versehen werden können, in denen ethylenische Doppelbindungen zur nachfolgenden Hydroborierung vorliegen.

Das Ausmaß der Hydroborierung an der Polymermatrix kann im Rahmen der insgesamt vorliegenden Doppelbindungen frei gewählt werden. Es hat sich allerdings als vorteilhaft erwiesen, wenn wenigstens ein substantieller Anteil dieser Doppelbindungen durch Einführung der borhaltigen Substituenten umgesetzt wird. So sind in bevorzugten Ausführungsformen der Erfindung wenigstens 30 % und vorzugsweise wenigstens 50 % der in der Polymermatrix ursprünglich vorhandenen ethylenischen Doppelbindungen hydroboriert. Besonders geeignet sind solche polymeren Organoborverbindungen, in denen wenigstens 80 % vorzugsweise wenigstens 90 % oder sogar wenigstens 95 % der ethylenischen Doppelbindungen der Umsetzung mit den borhaltigen Komponenten zugeführt worden sind. Ein praktisch vollständig hydroboriertes Material ist in vielen Fällen der bevorzugte Initiator im Sinne der erfindungsgemäßen Lehre.

Zur Hydroborierung kommen neben Diboran ($BH_3$) Organoboranverbindungen in Betracht, die einen oder zwei organische Reste insbsondere Kohlenwasserstoffreste aufweisen. Bevorzugte organische Reste sind hier Alkyl-, Cycloalkyl- und/oder Arylreste, wobei zwei gegebenenfalls vorliegende Reste auch miteinander - unter Einschluß des Boratoms - zu einem Ring geschlossen sein können. Die substituierenden Kohlenwasserstoffreste weisen insbesondere jeweils nicht mehr als 25 C-Atome auf. Bevorzugt enthält jeder dieser Reste nicht mehr als etwa 12 bis 15 C-Atome.

Eine besonders geeignete Klasse von Organoborverbindungen für die Herstellung der polymeren Initiatorkomponente sind Organobor-monohydridverbindungen, insbesondere Dialkylmonohydride. Typische Vertreter solcher Borverbindungen sind beispielsweise 9-Borabicyclo [3.3.1]nonan, Diisopinocampheylboran, Dicyclohexylboran, Thexylboran-(2,3-dimethyl-2-butylboran), 3,5-Dimethylborinan, Diisoamylboran. Unter diesen Verbindungen kann das zuerst genannte 9-Borabicyclo [3.3.1]nonan aus praktischen Gründen bevorzugt sein. Die vorstehend genannten Verbindungen können beispielsweise aus Natriumborhydrid und Bortrifluorid mit geeigneten Olefinen oder Diolefinen hergestellt werden. Auch können zur Darstellung Diboran, dessen Ether- Amin- oder Sulfidkomplexe eingesetzt werden. Ganz allgemein gilt, daß bevorzugt mit solchen Organoborverbindungen zur Hydroborierung der Polymermatrix gearbeitet wird, die bei Raumtemperatur eine hinreichende thermische Stabilität aufweisen und gegenüber der Einwirkung von Luftsauerstoff möglichst stabil sind.

Eine Zusammenstellung der Herstellungsmöglichkeiten geeigneter Borverbindungen findet sich in der Monographie Herbert C. Brown, "Organic Synthesis via Boranes", 1975, Verlag John Wiley & Sons, New York.

Zur Hydroborierung werden die ungesättigten Oligomeren bzw. Polymeren unter vollkommenem Sauerstoffausschluß durch Reaktion mit den ausgewählten Borhydridverbindungen zweckmäßig in Lösungsmitteln umgesetzt. Geeignet sind hier die bekannten Lösungsmittel für Organoborverbindungen, insbesondere Tetrahydrofuran oder Polyether wie Diethylenglykoldimethylether aber auch Ester, Halogenkohlenwasserstoffe und dergleichen.

Die oligomeren bzw. polymeren Organo-Borverbindungen, die gemäß der Erfindung verwendet werden, können dann durch Abziehen des Lösungsmittels isoliert werden. Sie sind je nach der Monomerzusammensetzung und dem Molekulargewicht viskos bis fest. Ihre Lagerung erfolgt zweckmäßigerweise im verschlossenen Gefäß, bevorzugt unter Inertgas beispielsweise Stickstoff. In Substanz sind diese polymeren bzw. oligomeren Organo-Borverbindungen gegenüber Luft relativ stabil. Ausgewählte Verbindungen können beispielsweise einen Tag lang an der Luft in einer offenen Schale gelagert werden, gleichwohl zeigen sie noch immer für die Aushärtung von olefinischen Komponenten durch Polymerisation eine Reaktivität, die mit der frisch hergestellten oder unter Sauerstoffausschluß gelagerten Komponente praktisch identisch ist.

Die erfindungsgemäß eingesetzten Organo-Borverbindungen eignen sich in hervorragender Weise als aerob wirksame Polymerisationsinitiatoren mit weitgehend steuerbarer Reaktivität. Die Erfindung betrifft dementsprechend in einer weiteren Ausführungsform die Verwendung der geschilderten neuen Organo-Borverbindungen als Polymerisationsinitiatoren für ethylenisch ungesättigte Systeme. Die Organo-Borverbindungen können dabei im Rahmen aller bekannten Polymerisations-Typen eingesetzt werden. Die Polymerisation kann also beispielsweise in Substanz, in Lösung, in Emulsion oder in Suspension durchgeführt werden. Zur Polymerisationsauslösung werden die polymeren Organo-Borverbindungen wenigstens mit katalytischen Mengen einer Sauerstoffquelle in Berührung gebracht. Üblicherweise kann als Sauerstoffquelle reiner Sauerstoff oder Luft verwendet werden. Möglich ist aber auch, den Sauerstoff in gebundener Form beispielsweise in Form von Hydroperoxiden oder Peroxiden zuzusetzen.

Die Beständigkeit der Organo-Borverbindungen gegen den Zutritt von Luftsauerstoff nimmt üblicherweise mit zunehmender Viskosität des Materials zu. Je viskoser die polymeren Organo-Borverbindungen sind, desto stabiler sind sie im allgemeinen gegen Luftsauerstoff. Feste Organo-Borverbindungen der erfindungsgemäßen Art sind häufig derart stabil gegenüber Zutritt von Luftsauerstoff, daß sie unter Luftzutritt sogar gemahlen werden können. Für ihre Verwendung als Polymerisationsinitiatoren liegt hier eine häufig wichtige Eigenschaft.

Zur Herstellung der Organo-Borverbindungen werden die ungesättigten oligomeren beziehungsweise polymeren Matrix-Materialien unter vollkommenem Sauerstoffausschluß mit Diboran und/oder wenigstens einer Organo-Boranverbindung umgesetzt. Die Umsetzung erfolgt zweckmäßig in Lösungsmitteln und kann bei Raumtemperatur oder nur schwach erhöhten Temperaturen vorgenommen werden. Auch Temperaturen unterhalb Raumtemperatur sind geeignet. Üblicherweise erfolgt die Umsetzung im Temperaturbereich von minus 40°C bis 100°C, vorzugsweise im Temperaturbereich von etwa 0 bis 60°C. Die eingesetzte Menge der borhaltigen Reaktanten wird in Abstimmung mit dem Ausmaß der reaktionsbereiten Stellen in der gegen Zutritt von Luft stabilen Polymermatrix so gewählt, daß das jeweils gewünschte Ausmaß an Umsetzung zwischen den Reaktanten stattfinden kann. Gegebenenfalls vorliegende geringe Überschußmengen des Borreaktanten, die nicht in Reaktion mit der polymeren Matrix treten, können durch nachfolgende gezielte Oxidationsreaktionen zu oxidischen Borverbindungen umgewandelt werden, die als solche das Reaktionsprodukt beziehungsweise seine Reaktivität nicht mehr gefährden.

**Beispiele**

A) <u>Herstellung der oligomeren bzw. polymeren Olefine Allgemeine Herstellvorschrift für Polymerisate:</u>

Ein Edelstahlautokiav mit Rührer und Temperaturmeßeinheit wird mit Acrylsäureester, Lösungsmittel (Tetrahydrofuran - THF), Radikalstarter (Azoisobuttersäurenitril - AIBN) und Regler (Thiophenol) beschickt und verschlossen. Der Autoklav wird 3 mal mit Stickstoff (5 atm) gespült und anschließend über eine Dosierbombe mit Butadien(-1,3) beschickt. Die Polymerisation wird 7 Stunden bei 60 ± 1°C unter Rühren durchgeführt. Der Maximaldruck betrug 9 atm. Der Ansatz wird dem Autoklaven entnommen und Lösungsmittel sowie nicht reagiertes Monomer am Rotationsverdampfer entfernt. Die Zusammensetzungen der Ansätze und Polymereingenschaften sind der Tabelle A (A1 - A4) zu entnehmen.

<u>Allgemeine Herstellvorschrift für Polykonllensate: Polyester</u>

In einem Dreihalskolben mit Rührer und Destillationsbrücke werden Alkenylbernsteinsäureanhydrid (ABSA) und Diol vorgelegt. Unter Stickstoff wird schnell auf 150°C und dann im Verlauf von 3 Stunden von 150°C auf 200°C hochgeheizt. Dabei spaltet sich bereits der größte Anteil des Reaktionswassers, der den Umsatz der Esterkondensation anzeigt, ab. Man läßt den Ansatz auf etwa 150°C abkühlen, evakuiert vorsichtig auf 10 Torr und vervollständigt den Umsatz bei 200°C und 10 Torr. Das Produkt wird heiß abgefüllt. Die Zusammensetzung der Ansätze und die Polymereigenschaften sind der Tabelle A (A6 - A10) zu entnehmen.

**Polyamide**

In einen Dreihhalskolben mit Rührer und Destillationsaufsatz wird das Amin vorgelegt und das Alkenylbernsteinsäureanhydrid (ABSA) zügig unter Wasserkühlung zugegeben wobei darauf geachtet werden muß, daß die Reaktionstemperatur um 100°C liegt, damit das Ammoniumsalz flüssig bleibt. Das Ammmoniumsalz wird unter Stickstoff im Verlauf von 2 Stunden langsam auf 200°C hochgeheizt. Dabei spaltet sich bereits der größte Anteil des Reaktionswassers, der den Umsatz der Amidbildung anzeigt, ab. Man läßt den Ansatz auf etwa 150°C abkühlen, evakuiert vorsichtig auf 10 Torr und vervollständigt die Amidbildung bei 200°C und 10 Torr. Das Produkt wird heiß abgefüllt. Die Zusammensetzung der Ansätze und die Oligomerbeziehungweise Polymereigenschaften sind der Tabelle A (A11 - A15) zu entnehmen.

**Tabelle A**

Übersicht über die dargestellten oligomeren und polymeren Olefine/Polymerisate

| Nr. | Polymerisationsansatz | | AIBN | Thiophenol | THF | mol-% Butadien | | Ergebnisse | |
|---|---|---|---|---|---|---|---|---|---|
| | Eingesetzte Mengen Monomer g | | g | g | g | im Monomer-gemisch | im Poly-mer[1] | Eigen-schaften des Polymer | Umsatz % |
| A 1 | Butadien 21,6 | Acrylsäure-methylester 137,8 | 1,6 | 0,92 | 35 | 20 | 38 | hochvis-koses Öl | 20 |
| A 2 | Butadien 108 | Acrylsäure-methylester 689 | 8,0 | 11,60 | 1400 | 20 | 44 | viskoses Öl | 17 |
| A 3 | Butadien 270 | Acrylsäure-butylester 641 | 8,0 | 11,60 | 1700 | 50 | 7,2 | hochvis-koses Öl | 73 |
| A 4 | Butadien | Acrylsäure butylester 513 | 4,0 | - | 1700 | 20 | 4,2 | sehr hoch-viskoses Öl | 85 |

1) Bestimmung erfolgte durch $^1$H-NMR

| Nr | Polymerisationsansatz Eingesetzte Menge Edukt/g | | Eigenschaften des Polymer | Ergebnisse Säure-zahl | Jod-zahl | Mole Doppel-bindung/100g Oligomer/Polymer |
|---|---|---|---|---|---|---|
| A 6 | Iso C$_8$ ABSA 63,3 | Hexamethylen-glycol 35,4 | viskos, bräunlich - | 48 | 77,7 | 0,32 |
| A 7 | C$_{10}$ ABSA 239 | Hexamethylen-glycol 118 | viskos, hellgelb | 27 | 72,9 | 0,29 |
| A 8 | C$_{16}$ ABSA 323 | Hexamethylen-glycol 118 | leicht viskos, bräunlich | 42 | 55,0 | 0,24 |
| A 9 | Maleinsäure 232,16 | Hexamethylen-glycol 236 | fest, weiß | 0 | 128 | 0,5 |
| A 10 | Maleinsäure 58,05 Adipinsäure 292,3 | Hexamethylen-glycol 292 | fest, weiß | 4,2 | 20 | 0,08 |

ABSA = Alkenylbernsteinsäureanhydrid

7

| Nr | Polymerisationsansatz Eingesetzte Menge Edukt/g | | Eigenschaften des Polymer | Ergebnisse Amin-zahl | Jod-zahl | Mole Doppel-bindung/100g Oligomer/Polymer |
|---|---|---|---|---|---|---|
| A 11 | Iso $C_8$ ABSA 58,5 | Trimethylhexa-methylendiamin 43,8 | viskos, braun | 115 | 69,3 | 0,29 |
| A 12 | $C_{10}$ ABSA 239 | Trimethylhexa-methylendiamin 158 | niedrigviskos, hellbraun | 115 | 76,2 | 0,26 |
| A 13 | $C_{10}$ ABSA 169,7 | Trimethylhexa-methylendiamin 75,4 | viskos, hellbraun | 29 | 78,3 | 0,35 |
| A 14 | $C_{16}$ ABSA 139,9 | Trimethylhexa-methylendiamin | niedrigviskos, braun-grün | 98 | 60,7 | 0,22 |
| A 15 | $C_{16}$ ABSA 195 | Trimethylhexa-methylendiamin 67,2 | viskos, braun-grün | 31 | 58,3 | 0,29 |

## B) Herstellung der oligomeren bzw. polymeren Boralkylstarter

Zur Befreiung von Restsauerstoff werden die Oligo- bzw. Polyolefine in der gleichen Menge THF gelöst und das Lösungsmittel im Vakuum bei $10^{-4}$ Torr abgezogen. In einer Glovebox werden erneut gleiche Gewichtsteile frischdestilliertes, entgastes THF zugegeben und die oligomeren bzw. polymeren Olefine gelöst. Unter vollständigem Sauerstoffausschluß werden die in der Tabelle B aufgelisteten Mengen an 9-Borabicyclo[3.3.1]nonan (9-BBN) zugegebenen und das Gemisch so lange gerührt, bis das 9-BBN quantitativ in Lösung gegangen ist. Im Anschluß erhitzt man 1 Stunde unter Rühren auf 60°C. Das THF wird im Vakuum abgezogen und das Vorratsgefäß verschlossen. Die Entnahme von Proben erfolgt unter Schutzgas und völligem Sauerstoffausschluß.

**Tabelle B**

Obersicht über die dargestellten oliogomeren und polymeren Boralkyle

| Nr. | Eingesetztes Olefin g | 9-BBN g | Modifizierungsgrad an der Doppelbildung % | Eigenschaften |
|---|---|---|---|---|
| B 1 | A1/10 | 1,0 | 22 | hochviskos |
| B 2 | A2/10 | 1,0 | 18 | viskos |
| B 3 | A3/10 | 0,72 | 100 | hochviskos |
| B 4 | A4/10 | 0,4 | 100 | zähviskos |
| B 5 | Poly(cis-1,4-butadien-1,3) 1) /10 | 0,7 | 3 | viskos |
| B 6 | A6/50 | 19,5 | 100 | homogen, zäh, orange |
| B 7 | A7/50 | 17 | 100 | homogen, hochviskos, hellgelb |
| B 8 | A8/50 | 14,6 | 100 | homogen, hochviskos, hellgelb |
| B 9 | A9/50 | 15,5 | 50 | homogen, hochviskos, rotbraun |
| B 10 | A10/50 | 4,8 | 100 | Pulver, hellbelb |
| B 11 | A11/50 | 17,7 | 100 | homogen, fest, orange |
| B 12 | A12/50 | 15,8 | 100 | homogen, fest, hellgelb |
| B 13 | A13/50 | 21,4 | 100 | homogen, fest, orange |
| B 14 | A14/50 | 13,5 | 100 | homogen, zäh, gelb |
| B 15 | A15/50 | 17,7 | 100 | homogen, viskos, gelb-orange |

1) Polyöl 130 der CWH, Hüls

C) <u>Verwendung der oligomeren bzw. polymeren Boralkylen als Härter für Monomerklebstoffe</u>

Allgemeine Vorschrift

In einem Becherglas wurden 40 g Polymethacrylsäuremethylester (PMMA, handelsübliches Pulver "Plexigum MB 319" der Firma Röhm, Darmstadt) in 45 g Methacrylsäuremethylester (MMA) und 5 g Methacrylsäure (MAS) unter Rühren gelöst. Zu jeweils 5 g dieser Mischung wurden unter weiterem intensiverem Rühren zwischen 1,5 und 23 Gew.-% der bereits unter B beschriebenen oligomeren bzw. polymeren Boralkylstarter (siehe Tabelle C1 - C15) zugegeben. Die Topfzeiten der Mischungen variieren zwischen 1 und 13 Minuten. Mit diesen Klebstoffen wurden innerhalb der Topfzeit sandgestrahlte und entfettete Eisenbleche verklebt und nach 24 Stunden die Festigkeiten im Zugscherversuch nach DIN 53 281/3 gemessen. Die Ergebnisse sind in den Tabellen 1-5 zusammengestellt.

Zum Nachweis der hohen Stabilität der dargestellten oligomeren bzw. polymeren Boralkyle gegenüber Luftsauerstoff wurden sie in einer weiteren Versuchsreihe im offenen Gefäß zwischen 24 und 72 Stunden an der Luft gelagert und im Anschluß als Härter eingesetzt und getestet. Die Topfzeiten und Zugscherfestigkeiten sind in den Tabellen C1 - C 15 in Klammern gesetzt.

**Tabelle C 1**

Topfzeiten und Zugscherfestigekeiten auf sandgestrahlten und entfetteten Eisenblechprüfkörpern bei der Härtung von Methacrylatklebstoffen (40 g PMMA, 45 g MMA, 5 g MAS) mit dem oligomeren Borarkyl aus Beispiel B 1.

| Härterkonzentration Gew.-% | Topfzeit min | Zugscherfestigkeiten $Nmm^{-2}$ |
|---|---|---|
| 1,5 | 10 | 19 |
| 3 | 10 | 20 |
| 5 | 5 | 24 |
| 10 | 5 | 12 |
| 23 | 2 | 9 |

**Tabelle C 2**

Topfzeiten und Zugscherfestigkeiten auf sandgestrahlten und entfetteten Eisenblechprüfkörpern bei der Härtung von Methacrylatklebstoffen (40 g PMMA, 45 g MMA, 5g MAS) mit dem oligomeren Boralkyl aus Beispiel B 2.

| Härterkonzentration Gew.-% | Topfzeit min | Zugscherfestigkeiten $Nmm^{-2}$ |
|---|---|---|
| 1,5 | 10 (12) | 21 (10) |
| 3 | 5 (7) | 25 (24) |
| 5 | 5 (5) | 29 (30) |
| 10 | 5 (5) | 27 (28) |
| 23 | 5 (4) | 13 (24) |

Bei den in Klammern gesetzten Meßergebnissen wurde der Boralkylhärter vor der Verwendung 24 Stunden bei Raumtemperatur an der Luft gelagert.

**Tabelle C 3**

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 3.

| Härterkonzentration Gew.-% | Topfzeit min | Zugscherfestigkeiten Nmm$^{-2}$ |
|---|---|---|
| 1,5 | 8 (11) | 16 (5) |
| 3 | 9 (8) | 27 (16) |
| 5 | 4 (5) | 29 (28) |
| 10 | 3 (4) | 28 (27) |
| 23 | 3 (3) | 26 (24) |

Bei den in Klarrmern gesetzten Meßergebnissen wurde der Boralkylhärter vor der Verwendung 72 Stunden bei Raumtemperatur an der Luft gelagert.

### Tabelle C 4

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem polymeren Boralkyl aus Beispiel B 4.

| Härterkonzentration Gew.-% | Topfzeit min | Zugscherfestigkeiten Nmm$^{-2}$ |
|---|---|---|
| 1,5 | 4 (11) | 0 (0) |
| 3 | 2,5 (11) | 16 (0,4) |
| 5 | 2 (9) | 15 (0,8) |
| 10 | 1,5 (3) | 19 (3,5) |
| 23 | 1,5 (2) | 9 (13) |

Bei den in Klammern gesetzten Meßergebnissen wurde der Boralkylhärter vor der Verwendung 24 Stunden bei Raumtemperatur an der Luft gelagert.

### Tabelle C 5

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 5.

| Härterkonzentration Gew.-% | Topfzeit min | Zugscherfestigkeiten Nmm$^{-2}$ |
|---|---|---|
| 1,5 | 2,5 (8) | 9 (1) |
| 3 | 3 (7) | 18 (8) |
| 5 | 2 (2) | 21 (16) |
| 10 | 2 (2) | 17 (17) |
| 23 | 1 (1) | 2 (3) |

Bei den in Klammern gesetzten Meßergebnissen wurde der Boralkylhärter vor der Verwendung 24 Stunden bei Raumtemperatur an der Luft gelagert.

### Tabelle C 6

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 6.

| Härterkonzentration Gew.-% | Topfzeit min | Zugscherfestigkeiten Nmm$^{-2}$ |
|---|---|---|
| 1,5 | 7 | 17 |
| 3 | 5 (6) | 26 (26) |
| 5 | 4 (4,5) | 27 (28) |
| 10 | 3 (4) | 26 (30) |
| 23 | 2,5 (3) | 20 (24) |

Bei den in Klammern gesetzten Meßergebnissen wurde der Boralkylhärter vor der Verwendung 48 Stunden bei Raumtemperatur an der Luft gelagert.

## Tabelle C 7

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 7.

| Härterkonzentration Gew.-% | Topfzeit min | Zugscherfestigkeiten $Nmm^{-2}$ |
|---|---|---|
| 1,5 | 6 | 9 |
| 3 | 5 (6) | 23 (21) |
| 5 | 4 (5) | 25 (27) |
| 10 | 4 (4) | 22 (23) |
| 23 | 2,5 (0,5) | 15 (18) |

Bei den in Klammern gesetzten Meßergebnissen wurde der Boralkylhärter vor der Verwendung 24 Stunden bei Raumtemperatur an der Luft gelagert.

## Tabelle C 8

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 8.

| Härterkonzentration Gew.-% | Topfzeit min | Zugscherfestigkeiten $Nmm^{-2}$ |
|---|---|---|
| 1,5 | 8 | 12 |
| 3 | 6 (8) | 20 (16) |
| 5 | 4 (5,5) | 24 (26) |
| 10 | 3,5 (4) | 21 (24) |
| 23 | 2 (2) | 13 (16) |

Bei den in Klammern gesetzten Meßergebnissen wurde der Boralkylhärter vor der Verwendung 48 Stunden bei Raumtemperatur an der Luft gelagert.

## Tabelle C 9

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 9

| Härterkonzentration Gew.-% | Topfzeit min | Zugscherfestigkeiten $Nmm^{-2}$ |
|---|---|---|
| 1,5 | 12 (9) | 25 (23) |
| 3 | 12 (5,5) | 30 (27) |
| 5 | 11,5 (4,5) | 32 (29) |
| 10 | 8,5 (3,5) | 26 (29) |
| 23 | 5 (3) | 20 (27) |

Bei den in Klammern gesetzten Meßergebnissen wurde der Boralkylhärter vor der Verwendung 24 Stunden bei Raumtemperatur an der Luft gelagert.

**Tabelle C 10**

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 10.

| Härterkonzentration Gew.-% | Topfzeit min | Zugscherfestigkeiten $Nmm^{-2}$ |
|---|---|---|
| 1,5 | 7 (9,5) | 27 (3) |
| 3 | 6,5 (13,5) | 29 (11) |
| 5 | 6,5 (12) | 28 (24) |
| 10 | 6,5 (11) | 29 (21) |
| 23 | 6 (20) | 27 (1) |

Bei den in Klamnern gesetzten Meßergebnissen wurde der Boralkylhärter vor der Verwendung 24 Stunden bei Raumtemperatur an der Luft gelagert.

**Tabelle C 11**

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 11.

| Härterkonzentration Gew.-% | Topfzeit min | Zugscherfestigkeiten $Nmm^{-2}$ |
|---|---|---|
| 1,5 | 4 (6) | 17 (17) |
| 3 | 4 (5) | 18 (24) |
| 5 | 3 (5) | 16 (27) |
| 10 | 2 (3) | 8 (21) |
| 23 | 1,5 (2) | 4 (13) |

Bei den in Klammern gesetzten Meßergebnissen wurde der Boralkylhärter vor der Verwendung 24 Stunden bei Raumtemperatur an der Luft gelagert.

**Tabelle C 12**

Topfzeiten und Zuguscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 12.

| Härterkonzentration Gew.-% | Topfzeit min | Zugscherfestigkeiten $Nmm^{-2}$ |
|---|---|---|
| 1,5 | 12 (11) | 14 (13) |
| 3 | 9 (10) | 27 (17) |
| 5 | 7 (5) | 30 (26) |
| 10 | 5 (4) | 26 (23) |
| 23 | 3 (3) | 20 (11) |

Bei den in Klammern gesetzten Meßergebnissen wurde der Boralkylhärter vor der Verwendung 24 Stunden bei Raumtemperatur an der Luft gelagert.

**Tabelle C 13**

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 13.

# 0 085 836

| Härterkonzentration Gew.-% | Topfzeit min | Zugscherfestigkeiten Nmm$^{-2}$ |
|---|---|---|
| 1,5 | 8 (8) | 20 (20) |
| 3 | 6 (6) | 24 (25) |
| 5 | 5 (5) | 25 (28) |
| 10 | 4 (4) | 18 (20) |
| 23 | 2,5 (2,5) | 1 (12) |

Bei den in Klammern gesetzten Meßergebnissen wurde der Boralkylhärter vor der Verwendung 24 Stunden bei Raumtemperatur an der Luft gelagert.

**Tabelle C 14**

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 14.

| Härterkonzentration Gew.-% | Topfzeit min | Zugscherfestigkeiten Nmm$^{-2}$ |
|---|---|---|
| 1,5 | 8 (12) | 8 (20) |
| 3 | 6 (10) | 15 (18) |
| 5 | 5 (10) | 18 (18) |
| 10 | 3,5 (4) | 17 (16) |
| 23 | 2 (3,5,) | 11 (12) |

Bei den in Klammern gesetzten Meßergebnissen wurde der Boralkylhärter vor der Verwendung 24 Stunden bei Raumtemperatur an der Luft gelagert.

**Tabelle C 15**

Topfzeiten und Zugscherfestigkeiten auf sandgestrahlten und entfetteten Eisenblechprüfkörpern bei der Härtung von Methacrylatklebstoffen (40 g PMMA, 45 g MMA, 5 g MAS) mit dem oligomeren Boralkyl aus Beispiel B 15.

| Härterkonzentration Gew.-% | Topfzeit min | Zugscherfestigkeiten Nmm$^{-2}$ |
|---|---|---|
| 1,5 | 8 (8) | 21 (18) |
| 3 | 5,5 (6) | 24 (28) |
| 5 | 3, 5 (4) | 19 (23) |
| 10 | 4,5 (4) | 15 (20) |
| 23 | 2,5 (3) | 3,6 (16) |

Bei den in Klarmnern gesetzten Meßergebnissen wurde der Boralkylhärter vor der Verwendung 24 Stunden bei Raumtemperatur an der Luft gelagert.

In völliger Analogie wurden Aluminium- und Buchenflolzprüfkörper einfach überlappend verklebt un die zugscherfestigkeiten ermittelt.

Zusätzlich wurden Klebstoffe auf der Basis Triethylenglykoldimethacryalt und Bisphenol A-dimethacrylat (Diacryl 101, Firma AKZO Chem.) mit den Härtern aus den Beispielen B 2 und B 3 polymerisiert. Mit ihnen wurden Eisen- und Aluminiumbelche einfach überlappend verklebt. Die Ergebnisse der Zugscherfestigkeitsmessungen sind der Tabelle C 16 zu entnehmen. Die Prüfkörper wurden zwischen Verkleben und Zerreißen 24 Stunden bei Raumtemperatur gelagert.

**Tabelle C 16**

Zugscherfestigkeiten bei der Verklebung von Methacrylatklebstoffen mit den oligomeren Boralkylen aus Beispiel B 2 und B 3.

| | Klebstoff | | | Härter | | verklebtes Material | Zugscherfestigkeit Nmm$^{-2}$ |
|---|---|---|---|---|---|---|---|
| | Monomer 1 | Monomer 2 | Polymer | Nr | Konz./Gew.-% | | |
| | Methylmeth-acrylat 45 g | Methacryl-säure 5 g | Polymethyl-methacrylat 40 g | B2 | 5 | Aluminium Buchenholz Aluminium | 8 3 14 |
| | | | | B 3 | 5 | | |
| | Triethylen-glycoldimeth-acrylat 75 g | Methacryl-säure 5 g | Polymethyl-methacrylat 20 g | B 2 | 3 | Eisen Aluminium Eisen | 14 9 14 |
| | | | | B 3 | 3 | | |
| | Diacryl 101 | Methacryl-säure | Polymethyl-methacrylat | B 2 | 3 | Eisen Aluminium | 10 11 |
| | 75 g | 5 g | 20 g | B 3 | 3 | Eisen Aluminium | 10 10 |

D <u>Polymerisation mit oligomeren bzw. polymeren Boralkylinitiatoren</u>

a) Polymerisation in Substanz

Gemische aus 80 g Methylmethacrylat (stabilisiert mit 100 ppm Hydrochinon) und 40 g Polymethylmethacrylat werden in Aluminiumbechern an der Luft jeweils mit 2,4 g der Starter aus Beispiel B vermischt. Die Gemische gelieren zunächst und polymerisieren dann zu glasartigen, hochfesten Produkten.

| Boralkylhärter | Zeit bis zur Gelierung | Aussehen des Polymerisats |
|---|---|---|
| B 2 | 5 min | durchsichtig, glasartig |
| B 3 | 60 min | weiß, glas-artig |
| B 5 | > 60 min | weiß, glas-artig |
| B 6 | 35 min | glasartig |
| B 7 | 35 min | glasartig |
| B 8 | 30 min | glasartig |
| B 9 | 40 min | glasartig |
| B 10 | > 70 min | glasartig |
| B 11 | 35 min | glasartig |
| B 12 | 40 min | glasartig |
| B 13 | 40 min | glasartig |
| B 14 | 45 min | glasartig |
| B 15 | 35 min | glasartig |

b) Fällungspolymerisation

Zu einer Lösung von 100 g Acrylamid in 200 g Ethanol werden unter schnellem Rühren 3 g des Starters B 2, der frisch in 12 g THF gelöst wurde, zugegeben. Es tritt sofort eine Trübung auf, die sich schnell zu einer feinen Fällung verstärkt. Innerhalb von 30 Minuten bildet sich ein nicht mehr ruhrbarer Niederschlag aus. Parallel erfolgt eine Temperatursteigerung auf 50°C. Die Probe bleibt über Nacht stehen, wird in 700 ml Ethanol aufgeschäumt und abgesaugt. Der Rückstand wird zweimal mit Ethanol nachgewaschen und bei 60°C im Vakuum getrocknet Ausbeute: 85 %.

Der Versuch wurde völlig analog mit den Startern B 3, B 6 und B 10 durchgeführt.

| Starter | Zeit bis zum Fest-werden der Probe | Ausbeute |
|---------|-----------------------------------|----------|
| B 3 | 30 min | 48 % |
| B 6 | 1 min | 96 % |
| B 11 | 30 min | 40 % |

c) Polymerisation in Lösung

100 g Acrylamid werden in 200 g Wasser gelöst und unter schnellen Rühren 3 g des Starters B 3, frisch gelöst in 12 g THF, zugegeben. Die wäßrige Lösung trübt sich leicht und gleichzeitig wird innerhalb von 2 min eine starke Viskositätszunahme deutlich. Die Temperatur steigt nach 30 min auf 45°C, nach 5 Stunden liegt eine feste, gallertartiege Masse im Reaktionsgefäß vor. Das Polymere wird mit Wasser verdünnt, in Ethanol gefällt, abgesaugt, 2 mal mit Ethanol gewaschen und getrocknet.

Ausbeute: 90 %.

**Patentansprüche**

1. Verwendung von Organo-Borverbindungen, bei denen die Bor enthaltenden Reste an eine gegen Zutritt von Luftsauerstoff wenigstens weitgehend unempfindliche organische Polymermatrix gebunden sind, als aerob wirkende Initiatoren für die Polymerisationsauslösung.

2. Ausführungsform nach Anspruch 1, dadurch gekennzeichnet, daß man Organo-Borverbindungen einsetzt, deren borhaltige Reste mit wenigstens einer Valenz des jeweiligen Boratoms unmittelbar an ein Kohlenstoffatom der Polymermatrix gebunden sind.

3. Ausführungsform nach Ansprüchen 1 und 2, dadurch gekennzeichnet, daß man Organo-Borverbindungen einsetzt, die als viskos-fließfähige bis feste, bevorzugt wenigstens weitgehend von Lösungsmitteln freie Massen vorliegen.

4. Ausführungsform nach den Ansprüchen 1 - 3, dadurch gekennzeichnet, daß man Organo-Borverbindungen einsetzt, die gebunden an die Polymermatrix Borwasserstoffreste und/oder Organoborreste enthalten, die bevorzugt als Substituenten Alkyl-, Cycloalkyl- und/oder Aryl-Reste aufweisen.

5. Ausführungsform nach Anspruch 4, dadurch gekennzeichnet, daß man Organo-Borbverbindungen einsetzt, bei denen die jeweiligen Kohlenwasserstoffreste in den die Polymermatrix substituierenden Organo-Borresten jeweils bis zu 25 C-Atome, vorzugsweise jeweils bis zu 12 C-Atome, aufweisen.

6. Ausführungsform nach den Ansprüchen 1 - 5, dadurch gekennzeichnet, daß man Organo-Borverbindungen einsetzt, bei denen die Polymermatrix ein mittleres Molekulargewicht im Bereich von 150 bis 3.000.000, vorzugsweise im Bereich von 300 bis 500.000 und insbesondere im Bereich von 300 bis 10.000 aufweist.

7. Ausführungsform nach den Ansprüchen 1 - 6, dadurch gekennzeichnet, daß man Organo-Borverbindungen einsetzt, bei denen die Polymermatrix ein ethylenische Doppelbindungen aufweisendes Oligomeres bzw. Polymeres ist, dessen Doppelbindungen wenigstens anteilsweise durch Einführung der borhaltigen Substituenten zu gesättigten Bindungen umgewandelt sind.

8. Ausführungsform nach Anspruch 7, dadurch gekennzeichnet, daß man Organo-Borverbindungen einsetzt, bei denen die borhaltigen Reste mittels Hydroborierung der ethylenischen Doppelbindungen in die Polymermatrix eingeführt sind.

9. Ausführungsform nach den Ansprüchen 1 - 8, dadurch gekennzeichnet, daß man Organo-Borverbindungen einsetzt, bei denen wenigstens 30 %, vorzugsweise wenigstens 50 % und insbesondere wenigstens 80 % der in der Polymermatrix ursprünglich vorhandenen ethylenischen Doppelbindungen hydroboriert sind.

10. Ausführungsform nach den Ansprüchen 1 - 9, dadurch gekennzeichnet, daß man Organo-Borverbindungen einsetzt, bei denen die Polymermatrix ein Polymerisat bzw. Copolymerisat, ein Polykondensat oder ein durch Polyaddition gewonnenes Polymermaterial ist.

11. Ausführungsform nach den Ansprüchen 1 - 10, dadurch gekennzeichnet, daß man Organo-Borverbindungen einsetzt, bei denen die Polymermatrix geradkettige oder verzweigtkettige Struktur aufweist, gegebenenfalls aber auch vernetzt ist.

12. Ausführungsform nach den Ansprüchen 1 - 11, dadurch gekennzeichnet, daß man Organo-Borverbindungen einsetzt, bei denen die Polymermatrix vor der Hydroborierung eine Jodzahl im Bereich von 1 bis 500, vorzugsweise im Bereich von bis 100 und insbesondere im Bereich von 8 bis 50 aufweist.

13. Ausführungsform nach den Ansprüchen 1 - 12, dadurch gekennzeichnet, daß man Organo-Borverbindungen einsetzt, bei denen die der Hydroborierung unterworfenen Doppelbindungen in der Hauptkette und/oder in Seitenketten der polymeren Organo-Borverbindung vorliegen.

**Claims**

1. The use of organoboron compounds, in which the boroncontaining residues are attached to an organic polymer matrix at least largely unaffected by atmospheric oxygen, as aerobic polymerization initiators.

2. The use claimed in claim 1, characterized in that the organoboron compounds used are those of which the boron-containing residues are directly attached by at least one valency of the particular boron atom to a carbon atom of the polymer matrix.

3. The use claimed in claims 1 and 2, characterized in that organoboron compounds present as viscous liquids to solid, preferably at least largely solvent-free masses are used.

4. The use claimed in claims 1 to 3, characterized in that organoboron compounds containing boron hydride residues and/or organoboron residues substituted preferably by alkyl, cycloalkyl and/or aryl radicals and attached to the polymer matrix are used.

5. The use claimed in claim 4, characterized in that organoboron compounds in which the particular hydrocarbon residues contain up to 25 carbon atoms and preferably up to 12 carbon atoms in the organoboron residues substituting the polymer matrix are used.

6. The use claimed in claims 1 to 5, characterized in that organoboron compounds in which the polymer matrix has an average molecular weight of 150 to 3,000,000 and preferably of 300 to 500,000 and more preferably of 300 to 10,000 are used.

7. The use claimed in claims 1 to 6, characterized in that organoboron compounds in which the polymer matrix is an oligomer or polymer containing ethylenic double bonds, in which at least some of the double bonds have been converted into saturated bonds by introduction of the boron-containing substituents, are used.

8. The use claimed in claim 7, characterized in that organoboron compounds in which the boron-containing residues are introduced by hydroboration of the ethylenic double bonds are used.

9. The use claimed in claims 1 to 8, characterized in that organoboron compounds in which at least 30 %, preferably at least 50 % and more preferably at least 80 % of the ethylenic double bonds originally present in the polymer matrix are hydroborated are used.

10. The use claimed in claims 1 to 9, characterized in that organoboron compounds in which the polymer matrix is a polymer or copolymer, a polycondensate or a polymer material obtained by polyaddition are used.

11. The use claimed in claims 1 to 10, characterized in that organoboron compounds in which the polymer matrix has a straight-chain or branched-chain structure and may even be cross-linked are used.

12. The use claimed in claims 1 to 11, characterized in that organoboron compounds in which the polymer matrix has an iodine value of 1 to 500, preferably 5 to 100 and more preferably 8 to 50 before the hydroboration step are used.

13. The use claimed in claims 1 to 12, characterized in that organoboron compounds in which the double bonds subjected to the hydroboration are in the main chain and/or in side chains of the polymeric organoboron compound are used.

**Revendications**

1. Utilisation de composés organo-boriques pour lesquels les restes contenant du bore sont liés à une matrice organique polymérique insensible au moins d'une manière extensive vis-à-vis de l'entrée de l'air, comme initiateurs agissant en aérobie pour le déclenchement de la polymérisation.

2. Mode d'exécution selon la revendication 1, caractérisé en ce que l'on met en oeuvre des composés organo-boriques dont les restes contenant du bore sont liés avec au moins une valence de chaque atome de bore immédiatement à un atome de carbone de la matrice polymérique.

3. Mode d'exécution selon les revendications 1 et 2, caractérisé en ce que l'on met en oeuvre des organo-boriques qui se présentent comme des masses au moins largement dépourvues de solvants, de préférence visqueuses-fluantes à solides.

4. Mode d'exécution selon les revendications 1 à 3, caractérisé en ce que l'on met en oeuvre des organo-boriques qui contiennent des restes bore-hydrogène et/ou des restes organo-boriques liés à la matrice polymérique, qui possèdent de préférence comme substituants des restes alcoyles, cycloalcoyle et/ou aryle.

5. Mode d'exécution selon la revendication 4, caractérisé en ce que l'on met en oeuvre des composés organo-boriques, pour lesquels les restes hydrocarbonés respectifs possèdent dans les restes organo-boriques qui substituent la matrice polymérique, chacun jusqu'à 25 atomes de Carbone et d'une manière préférée chacun jusqu'à 12 atomes de carbone.

6. Mode d'exécution selon les revendications 1 à 5, caractérisé en ce que l'on met en oeuvre des composés organo-boriques pour lesquels la matrice polymérique possède un poids moléculaire moyen dans la zone de 150 à 3 000 000, de préférence dans la zone de 300 à 500 000 et en particulier dans la zone de 300 à 10 000.

7. Mode d'exécution selon les revendications 1 à 6, caractérisé en ce que l'on met en oeuvre des composés organo-boriques pour lesquels la matrice polymérique est un polymère ou un oligomère possédant des doubles liaisons éthyléniques, dont les doubles liaisons au moins en partie sont converties en liaisons saturées par introduction des substituants contenant du bore.

8. Mode d'exécution selon la revendication 7, caractérisé en ce que l'on met en oeuvre des composés organo-boriques pour lesquels les restes contenant du bore sont introduits par hydroboration des doubles liaisons éthyléniques.

9. Mode d'exécution selon les revendications 1 à 8, caractérisé en ce que l'on met en oeuvre des composés organo-boriques pour lesquels au moins 30 %, de préférence au moins 50 % et en particulier au moins 80 % des doubles liaisons éthyléniques se trouvant à l'origine dans la matrice polymérique sont hydroborées.

10. Mode d'exécution selon les revendications 1 à 9, caractérisé en ce que l'on met en oeuvre des composés organo-boriques pour lesquels la matrice polymérique est un polymérisate ou un copolymérisat, un polycondensat ou un matériau polymérique obtenu par polyaddition.

11. Mode d'exécution selon les revendications 1 à 10, caractérisé en ce que l'on met en oeuvre des composés organo-boriques, la matrice polymérique présente une structure à chaîne linéaire ou à chaîne ramifiée qui peut être aussi éventuellement réticulée.

12. Mode d'exécution selon les revendications 1 à 11, caractérisé en ce que l'on met en oeuvre des composés organo-boriques pour lesquels la matrice polymérique possède avant l'hydroboration un indice d'iode dans la zone de 1 à 500, de préférence dans la zone de 5 à 100 et en particulier dans la zone de 8 à 50.

13. Mode d'exécution selon les revendications 1 à 12, caractérisé en ce que l'on met en oeuvre des composés organo-boriques pour lesquels les doubles liaisons soumises à l'hydroboration se présentent dans la chaîne principale et/ou dans les chaînes latérales du composé organo-borique polymérique.